# EUROPÄISCHE PATENTSCHRIFT

(11) **EP 2 761 982 B1**
(45) Veröffentlichungstag und Bekanntmachung des Hinweises auf die Patenterteilung: **07.10.2015**
(21) Anmeldenummer: 14152363.9
(22) Anmeldetag: 24.01.2014
(51) Int. Cl.: A01C 23/00, F16K 17/04, F16K 17/12, F16K 17/164

(54) **Sicherheitsventil für einen Kunststofftank, insbesondere einen Kunststoffgülletank**
Safety valve for a plastic tank, in particular a plastic liquid manure tank
Soupape de sécurité pour un réservoir en matière synthétique, notamment une cuve à lisier en matière synthétique

(30) Priorität: 25.01.2013 DE 202013000718 U
(43) Veröffentlichungstag der Anmeldung: 06.08.2014
(73) Patentinhaber: Zunhammer, Sebastian, 83301 Traunreut (DE)
(72) Erfinder: Zunhammer, Sebastian, 83301 Traunreut (DE)
(74) Vertreter: Einsiedler, Johannes

(56) Entgegenhaltungen:
- DE-B- 1 158 464
- GB-A- 1 260 040
- US-A- 5 803 115

## Beschreibung

Die Erfindung betrifft ein Sicherheitsventil für einen Kunststofftank, insbesondere einen Kunststoffgülletank, mit einem an einer Tankoberseite ausgebildeten Ventilkörper mit einem Ventilsitz und einem Ventilteller, der den Tank gegen den Ventilsitz abdichtet.

Es existieren grundsätzlich verschieden Arten einen Gülletank zu befüllen. So kann gemäß der WO 2006/64701 A1 ein Tank mittels einer Vakuumpumpe evakuiert und durch das entstehende Vakuum durch Gülle über einen Güllevorratsbehälter gefüllt werden. Beim Entleeren des Gülletanks wird mit der o.g. Vakuumpumpe Luft in den Tank gedrückt, so dass die Gülle über ein Leitungssystem zu einem Verteilerorgan gefördert und schließlich auf einen zu düngenden Boden ausgebracht wird. Diese Art der Befüllung ist in der Regel auf sog. druckstabile Behälter aus Stahl beschränkt.

Eine weitere Art einen Gülletank zu befüllen ist eine Fremdbefüllung über einen Einfülldom. Dabei wird mit Hilfe, beispielsweise einer Tauchschneidpumpe, die Gülle aus einem Güllevorratsbehälter, beispielsweise einer Güllegrube, in den Tank gepumpt. Ferner kann auch bei sog. Pumptankwagen, die in der Regel über leichte Kunststofftanks verfügen, der Tank über eine am Tankwagen angeordnete Verdrängerpumpe befüllt werden. Die beiden letztgenannten Arten einer Befüllung sind sowohl für druckstabile Tanks, insbesondere Stahltanks, wie auch für druckempfindliche Tanks, insbesondere Kunststofftanks geeignet.

Werden druckempfindliche Kunststofftanks befüllt ist stets darauf zu achten, dass sich weder ein Über- noch ein Unterdruck in dem Tank aufbaut, da diese Drücke Schäden, insbesondere Brüche oder Risse in der Tankwand verursachen.

Zur Vermeidung eines Unterdrucks, insbesondere bei Entleeren des Tanks kann beispielsweise ein Einfüllschieber geöffnet werden. Dies hat jedoch den Nachteil, dass beim Ausbringen der Gülle auf bergigem Gelände oder beim Bremsen des Tankwagens Gülle durch die Öffnung, d.h. den Einfüllschieber, verspritzen kann. Es ist daher üblich einen Druckausgleich für einen druckempfindlichen Kunststofftank über einen an der Tankoberseite angeordneten Überlaufschlauch zu bewerkstelligen. Ein derartiger Überlaufschlauch ist mit einer Tanköffnung an der Tankoberseite verbunden und verläuft zunächst senkrecht nach oben, um dann in einem Bogen nach unten zu zeigen. So wird zumindest ein Verspritzen der Gülle beim Bremsen oder bei Bergfahrten vermieden. Der Schlauch kann ferner durch ein Ventil verschlossen werden, um bei Transportfahrten eine Straßenverschmutzung zu vermeiden. Bei Arbeitsfahrten, d.h. beim Ausbringen der Gülle auf einen zu düngenden Boden, wie auch beim Befüllen des Tanks muss das Ventil jedoch geöffnet sein, um einen Druckausgleich zu gewährleisten.

Für den Fall, dass eine Bedienperson vergisst nach einer Transportfahrt bzw. vor einer Arbeitsfahrt das Ventil des Überlaufschlauchs zu öffnen, oder aber sollte der Schlauch stark verschmutzt oder zugefroren sein, ist ein Druckausgleich für den Kunststofftank nicht oder zumindest nicht in dem nötigen Umfang gewährleistet, und es kann zu Schäden, insbesondere Rissen, am Tank kommen.

Aus der gattungsgemäßen US 5 803 115 A ist ein Sicherheitsventil zur Über- und Unterdruckentlastung eines unter Druck setzbaren Behälters bekannt, wobei das Ventil einen am Tank dichtend befestigbaren Ventilkörper, einen länglichen Stab mit einem Federsitz darauf, und ein Abdeckelement zur axialen Bewegung mit der Stange umfasst. Der Aufbau dieses als Kombinationsventil ausgebildeten Sicherheitsventils ist jedoch für eine Anwendung im landwirtschaftlichen Bereich zu komplex.

Aufgabe der vorliegenden Erfindung ist es ein Sicherheitsventil für einen Kunststofftank, insbesondere einen Kunststoffgülletank, bereitzustellen, das neben den Druckausgleichseinrichtungen gemäß dem Stand der Technik eine zusätzliche Einrichtung zum Schutz des Tanks vor Druckunterschieden, insbesondere vor einem Unterdruck darstellt.

Diese Aufgabe wird von einem Sicherheitsventil mit den Merkmalen des Anspruchs 1 gelöst. Durch die Merkmale der abhängigen Ansprüche wird die Erfindung in vorteilhafterweise noch weiter ausgestaltet.

Die Erfindung geht von dem allgemeinen Gedanken aus, die Elastizität eines Kunststofftanks, insbesondere eines Kunstoffgülletanks in vorteilhafterweise auszunützen. Durch einen an einer Tankoberseite ausgebildeten Ventilkörper mit einem Ventilsitz und einem Ventilteller, der den Tank gegen den Ventilsitz abdichtet, wobei der Ventilteller über eine Halteeinrichtung im Tank gehaltert ist, wird das erfindungsgemäße Ventil geöffnet sobald sich das Tankvolumen infolge eines Unterdrucks verringert.

In der Regel wird sich in Folge eines Unterdrucks nämlich die Tankwand an der Oberseite des Gülletanks leicht konkav verformen. Diese Verformung wird erfindungsgemäß ausgenutzt um den Ventilsitz von dem Ventilteller zu trennen, so dass Luft in den Tank einströmen kann und damit ein Druckausgleich hergestellt wird.

In einer vorteilhaften Ausführungsform des erfindungsgemäßen Sicherheitsventils ist der Ventilteller gegenüber dem Ventilsitz über eine Halteeinrichtung im Tank ortsfest gehaltert. Demnach reicht bereits eine geringfügige konkave Verformung der Tankwand um den Ventilsitz vom Ventilteller zu trennen, und damit das Ventil zu öffnen. Diese Ausführungsform eignet sich insbesondere für leichte Kunststofftanks mit dünnen Tankwänden.

In einer weiteren vorteilhaften Ausführungsform des erfindungsgemäßen Sicherheitsventils ist der Ventilteller gegenüber dem Ventilsitz über eine Halteeinrichtung im Tank beschränkt ortsverschieblich gehaltert. Der Ventilteller ist nach oben längsverschieblich, wohingegen die Verschieblichkeit nach unten, beispielsweise durch einen Anschlag, beschränkt ist. Durch diese vertikal beschränkte Verschieblichkeit des Ventiltellers wird erfindungsgemäß der Ventilsitz durch eine konkave Verformung der Tankwand vom Ventilteller getrennt.

Baut sich hingegen, beispielsweise beim Befüllen des Tanks ein Überdruck auf, wird der über eine Halteeinrichtung im Tank beschränkt ortsverschiebliche Ventilteller, gegebenenfalls bis zu einem oberen Anschlag, vertikal nach oben gedrückt, und das Sicherheitsventil öffnet in herkömmlicher Art und Weise wobei der Ventilteller vom Ventilsitz getrennt wird.

Da sich beim Befüllen des Gülletanks oder bei Transportfahrten oftmals ein unschädlicher Überdruck im Tank aufbaut, ist in einer bevorzugten Weiterbildung der Ventilteller federbelastet. Dies hat den Vorteil, dass zunächst ein bestimmter Überdruck im Tank herrschen muss, bevor das Sicherheitsventil öffnet. Dabei kann der Ventilteller druckfederbelastet sein, wenn die Federeinrichtung außerhalb des Tanks angeordnet ist oder zugfederbelastet, wenn die Federeinrichtung innerhalb des Tanks angeordnet ist.

Erfindungsgemäß ist der Ventilkörper an der Tankoberseite ausgebildet. Der Ventilkörper kann integral mit dem Tank ausgebildet, beispielsweise angespritzt oder stoffschlüssig mit der Tankwand verbunden sein. Bevorzugt ist der Ventilkörper ein, vorzugsweise elastischer Einsatz, mit zwei umlaufenden Dichtlippen, der in eine entsprechende Öffnung der Tankwand eingebracht wird. Dies hat den Vorteil, dass auch ältere Kunststofftanks über den Zubehörhandel mit einem erfindungsgemäßen Sicherheitsventil ausgestattet werden können.

Erfindungsgemäß ist der Ventilteller über eine Halteeinrichtung im Tank gehaltert. Die Halteeinrichtung ist ein- oder mehrteilig ausgeführt und am Tankboden, oder an im Tankraum vorhandenen Querstreben oder Schwallwänden befestigt. Die Befestigung an Querstreben oder Schwallwänden hat den Vorteil, dass die Halteeinrichtung kürzer und damit materialökonomisch ausgeführt werden kann. Über die Halteeinrichtung ist der Ventilteller ortsfest oder beschränkt ortsverschieblich, insbesondere längsverschieblich gehaltert. Der Ventilteller kann beispielsweise über eine vertikal angeordnete Führungsvorrichtung zwischen zwei Anschlägen längsverschieblich gehaltert sein.

Die Art, Größe und Ausführung des Ventiltellers ist nicht erfindungswesentlich. So kann der Ventilteller kugel- oder kegelförmig oder eben ausgebildet sein, und sollte in einer Schließstellung auf dem Ventilsitz dichtend aufliegen. Bevorzugt ist der Ventilteller ein, vorzugsweise elastischer runder Körper, beispielsweise eine Gummikugel, mit einer zentral angeordneten Bohrung oder Durchbruch zur Befestigung der Halteeinrichtung.

Zusätzliche Einzelheiten und weitere Vorteile der Erfindung werden nachfolgend an Hand von drei Sicherheitsventilen, auf welche die vorliegende Erfindung jedoch nicht beschränkt ist, in Verbindung mit der beigefügten Zeichnung beschrieben. In den Figuren sind gleiche oder funktionsgleiche technische Merkmale mit den gleichen Bezugszeichen versehen.

Darin zeigen schematisch:
- Fig. 1a und 1b: eine erste Ausführungsform eines Sicherheitsventils in geschlossenem bzw. in einem aufgrund eines Unterdrucks geöffneten Zustand;
- Fig. 2b und 2b: eine zweite Ausführungsform eines Sicherheitsventils in geschlossenem bzw. in einem aufgrund eines Unterdrucks geöffneten Zustand und
- Fig. 3: eine dritte Ausführungsform eines Sicherheitsventils in einem aufgrund eines Überdrucks geöffneten Zustand.

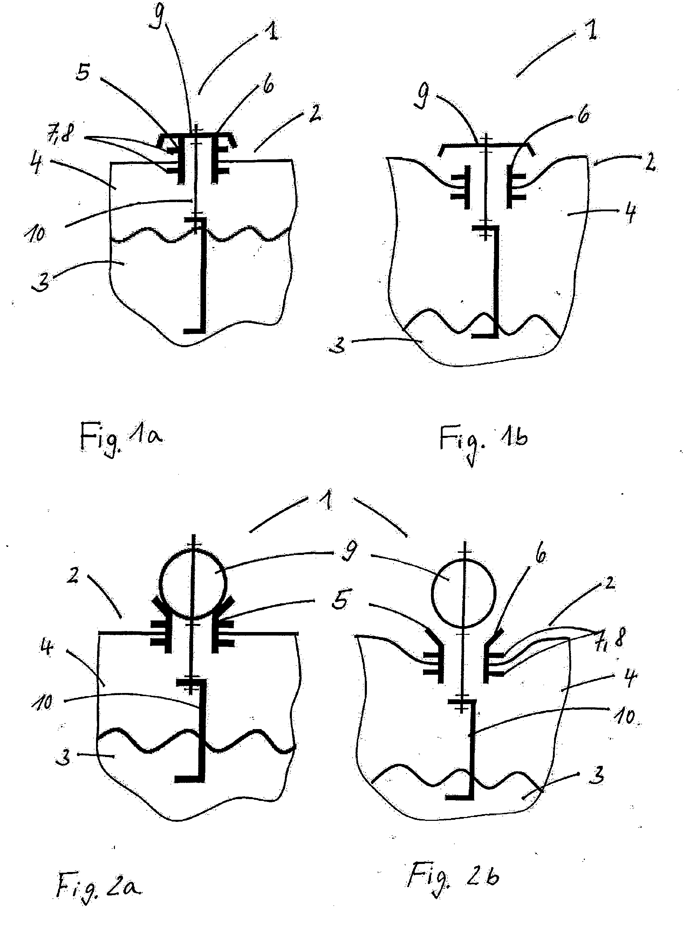

Figur 1 a zeigt eine erste Ausführungsform eines Sicherheitsventils 1 in einem geschlossenen Zustand. Auf einer Tankoberseite 2 eines mit Gülle 3 gefüllten Gülletanks 4 ist ein Ventilkörper 5 mit einem Ventilsitz 6 und mit zwei umlaufenden Dichtlippen 7, 8 in die Tankwand eingebracht. Auf dem Ventilsitz 6 liegt ein flacher Ventilteller 9, der über eine Halteeinrichtung 10 im Tank 4 gehaltert ist. Der Ventilteller 9 dichtet den Tank 4 gegen den Ventilsitz 6 ab. Dabei kann der Ventilteller 9 im Fall einer beschränkt ortsverschieblichen Ausführungsform lediglich durch sein Eigengewicht auf dem Ventilsitz 6 aufliegen oder aber im Fall einer ortsfesten Ausführungsform durch die Halteeinrichtung 10 fest verankert sein.

Figur 1b zeigt das Sicherheitsventil 1 in einem geöffneten Zustand. Durch das Entleeren der Gülle 3, beispielsweise während einer Arbeitsfahrt, und in Ermangelung einer (voll)funktionsfähigen bzw. geöffneten Druckausgleichseinrichtung entsteht ein Unterdruck in dem Gülletank 4. Die Tankwand an der Oberseite des Tanks 2 hat sich konkav verformt. Durch diese Verformung wird der Ventilsitz 6 von dem ortsfest oder beschränkt ortsverschieblich gehalterten Ventilteller 9 getrennt. Es strömt Luft in den Kunststoffgülletank 4 ein, wodurch der Unterdruck ausgeglichen wird.

Figur 2a bzw. 2b zeigt eine zweite Ausführungsform eines Sicherheitsventils 1 in einem geschlossenen bzw. geöffneten Zustand. Auf einer Tankoberseite 2 eines mit Gülle 3 gefüllten Gülletanks 4 ist ein Ventilkörper 5 mit einem Ventilsitz 6 und mit zwei umlaufenden Dichtlippen 7, 8 in die Tankwand eingebracht. Auf der trichterförmigen Sitzfläche des Ventilsitzes 6 liegt ein kugelförmiger Ventilteller 9, der über eine Halteeinrichtung 10 im Tank 4 gehaltert ist. Der kugelförmige Ventilteller 9 dichtet den Tank gegen den Ventilsitz 6 ab. Dabei kann der Ventilteller 9 in Fall einer beschränkt ortsverschieblichen Ausführungsform lediglich durch sein Eigengewicht auf der Sitzfläche des Ventilsitzes 6 aufliegen oder aber im Fall einer ortsfesten Ausführungsform durch die Halteeinrichtung 10 fest verankert sein.

Durch ein Entleeren der Gülle 3 und in Ermangelung eines Druckausgleichs durch eine (voll)funktionsfähige Ausgleichseinrichtung, verringert sich das Tankvolumen, wodurch sich die Tankwand an der Oberseite des Tanks 2 konkav verformt. Durch diese Verformung wird der Ventilsitz 6 von dem ortsfest oder beschränkt ortsverschieblich gehalterten Ventilteller 9 getrennt. Es kann Luft in den Kunststoffgülletank 4 einströmen, wodurch der Unterdruck ausgeglichen wird.

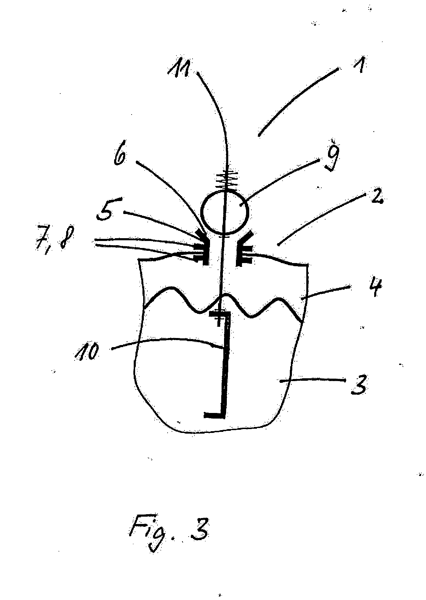

Figur 3 zeigt eine dritte Ausführungsform eines Sicherheitsventils 1 in einem geöffneten Zustand. Auf einer Tankoberseite 2 eines mit Gülle 3 gefüllten Gülletanks 4 ist ein Ventilkörper 5 mit einem Ventilsitz 6 und mit zwei umlaufenden Dichtlippen 7, 8 in die Tankwand eingebracht. Auf der trichterförmigen Sitzfläche des Ventilsitzes 6 liegt ein kugelförmiger Ventilteller 9, der über eine Halteeinrichtung 10 im Tank 4 gehaltert ist. Der runde Ventilteller 9 ist durch eine Federeinrichtung 11 in Richtung Ventilsitz 6 druckfederbelastet. Durch eine beschränkt ortsverschiebliche Halteeinrichtung 11 des Ventiltellers 9 ist dieser, gegebenenfalls bis zu einem oberen Anschlag, noch oben längsverschieblich, wohingegen ein Verschieblichkeit nach unten blockiert ist. Dadurch wird im Falle eines sich aufbauenden Unterducks und einer damit einhergehenden konkaven Verformung der Tankwand der Ventilsitz vom Ventilteller getrennt. Im Falle eins sich aufbauenden Überdrucks wird der durch die beschränkt ortsverschiebliche Halteeinrichtung gehalterte Ventilteller nach Überwindung der Federkraft der Federeinrichtung 9 nach oben gedrückt bis schließlich der Ventilteller 9 von dem Ventilsitz 6 getrennt wird.

Das erfindungsgemäße Sicherheitsventil eignet sich insbesondere als zusätzliche Sicherheitseinrichtung zur Vermeidung von Druckschäden an druckempfindlichen Kunststofftanks, insbesondere Kunststoffgülletanks. Das Ventil ist kostengünstig, kann auch noch nachträglich in bereits fertiggestellte Tanks eingebaut werden und arbeitet zuverlässig über gesamte die Lebensdauer der Tanks.

## Patentansprüche

1. Sicherheitsventil (1) für einen Kunststofftank, insbesondere einen Gülletank, mit einem an einer Tankoberseite (2) ausgebildeten Ventilkörper (5) mit einem Ventilsitz (6) und einem Ventilteller (9), der den Tank gegen den Ventilsitz (6) abdichtet, wobei der Ventilteller (9) über eine Halteeinrichtung (10) im Tank gehaltert ist, **dadurch gekennzeichnet, dass** die Halteeinrichtung (10) ein- oder mehrteilig ausgeführt ist und am Tankboden, an einer Querstrebe oder einer Schwallwand befestigt ist.

2. Sicherheitsventil (1) nach Anspruch 1, **dadurch gekennzeichnet, dass** der Ventilteller (9) gegenüber dem Ventilsitz (6) über die Halteeinrichtung (10) ortsfest gehaltert ist.

3. Sicherheitsventil nach Anspruch 1, **dadurch gekennzeichnet, dass** der Ventilteller (9) gegenüber dem Ventilsitz (6) über die Halteeinrichtung (10) beschränkt ortsverschieblich gehaltert ist.

4. Sicherheitsventil (1) nach Anspruch 3, **dadurch gekennzeichnet, dass** der Ventilteller (9) federbelastet ist.

5. Sicherheitsventil (1) nach Anspruch 3 oder 4, **dadurch gekennzeichnet, dass** die Verschieblichkeit nach unten durch einen Anschlag beschränkt ist.

6. Sicherheitsventil (1) nach einem der vorstehenden Ansprüche, **dadurch gekennzeichnet, dass** der Ventilteller (9) kugel- oder kegelförmig oder eben ausgebildet ist und in einer Schließstellung auf dem Ventilsitz (6) aufliegt.

7. Sicherheitsventil (1) nach einem der vorstehenden Ansprüche, **dadurch gekennzeichnet, dass** der Ventilkörper (5) als elastischer Einsatz, mit zwei umlaufenden Dichtlippen (7, 8) ausgebildet ist

8. Sicherheitsventil (1) nach einem der vorstehenden Ansprüche, **dadurch gekennzeichnet, dass** der durch die Halteeinrichtung (10) gehalterte Ventilteller (9) bis zu einem oberen Anschlag, noch oben längsverschieblich ist, und dass eine Verschieblichkeit nach unten blockiert ist.

9. Güllefass oder Selbstfahrer mit einem Sicherheitsventil (1) nach einem der vorstehenden Ansprüche.

## Claims

1. Safety valve (1) for a plastic tank, in particular a liquid manure tank, with a valve body (5) which is formed on a tank upper side (2) with a valve seat (6) and a valve disc (9) which seals off the tank against the valve seat (6), wherein the valve disc (9) is held in the tank via a holding device (10), **characterized in that** the holding device (10) is of single- or multi-part design and is fastened to the tank base, to a cross strut or to a splash wall.

2. Safety valve (1) according to Claim 1, **characterized in that** the valve disc (9) is held in a positionally fixed manner in relation to the valve seat (6) via the holding device (10).

3. Safety valve according to Claim 1, **characterized in that** the valve disc (9) is held so as to be displaceable in position to a limited extent in relation to the valve seat (6) via the holding device (10).

4. Safety valve (1) according to Claim 3, **characterized in that** the valve disc (9) is spring-loaded.

5. Safety valve (1) according to Claim 3 or 4, **characterized in that** the displaceablity downwards is limited by a stop.

6. Safety valve (1) according to one of the preceding claims, **characterized in that** the valve disc (9) is of spherical or conical or flat design and, in a closed position, rests on the valve seat (6).

7. Safety valve (1) according to one of the preceding claims, **characterized in that** the valve body (5) is in the form of an elastic insert, with two peripheral sealing lips (7, 8).

8. Safety valve (1) according to one of the preceding claims, **characterized in that** the valve disc (9) held by the holding device (10) is longitudinally displaceable upwards as far as an upper stop, and **in that** displaceablity downwards is blocked.

9. Liquid manure drum or self-propelling vehicle with a safety valve (1) according to one of the preceding claims.

## Revendications

1. Soupape de sécurité (1) pour un réservoir en matière synthétique, en particulier un réservoir à lisier, comprenant un corps de soupape (5) réalisé sur un côté supérieur de réservoir (2) et présentant un siège de soupape (6) et une tête de soupape (9) qui étanchéifie le réservoir contre le siège de soupape (6), la tête de soupape (9) étant retenue dans le réservoir par le biais d'un dispositif de retenue (10), **caractérisée en ce que** le dispositif de retenue (10) est réalisé en une ou plusieurs parties et est fixé au fond du réservoir, à une traverse ou à une paroi brise-flots.

2. Soupape de sécurité (1) selon la revendication 1, **caractérisée en ce que** la tête de soupape (9) est retenue de manière immobile par rapport au siège de soupape (6) par le biais du dispositif de retenue (10).

3. Soupape de sécurité selon la revendication 1, **caractérisée en ce que** la tête de soupape (9) est retenue de manière déplaçable de façon limitée par rapport au siège de soupape (6) par le biais du dispositif de retenue (10).

4. Soupape de sécurité (1) selon la revendication 3, **caractérisée en ce que** la tête de soupape (9) est sollicitée par ressort.

5. Soupape de sécurité (1) selon la revendication 3 ou 4, **caractérisée en ce que** la mobilité est limitée vers le bas par une butée.

6. Soupape de sécurité (1) selon l'une quelconque des revendications précédentes, **caractérisée en ce que** la tête de soupape (9) est réalisée en forme de sphère ou de cône ou de manière plane et repose sur le siège de soupape (6) dans une position de fermeture.

7. Soupape de sécurité (1) selon l'une quelconque des revendications précédentes, **caractérisée en ce que** le corps de soupape (5) est réalisé en tant qu'insert élastique présentant deux lèvres d'étanchéité périphériques (7, 8).

8. Soupape de sécurité (1) selon l'une quelconque des revendications précédentes, **caractérisée en ce que** la tête de soupape (9) retenue par le dispositif de retenue (10) est déplaçable longitudinalement vers le haut jusqu'à une butée supérieure, et **en ce qu'**une mobilité vers le bas est bloquée.

9. Cuve à lisier ou véhicule automoteur comprenant une soupape de sécurité (1) selon l'une quelconque des revendications précédentes.
